# EUROPEAN PATENT APPLICATION

(11) **EP 4 782 901 A1**
(43) Date of publication of application: **29.07.2026**
(21) Application number: 24867188.5
(22) Date of filing: 15.08.2024
(51) Int. Cl.: G02B 13/06, G03B 35/00, G03B 37/04

(54) **VEHICLE BOTTOM ENVIRONMENT TEST CAMERA, VEHICLE BOTTOM ENVIRONMENT TEST METHOD, AND VEHICLE SYSTEM**

(30) Priority: 20.09.2023 CN 202311222618; 11.01.2024 CN 202420064894 U; 17.05.2024 CN 202410621893
(71) Applicant: Zhejiang Sunny Smartlead Technologies Co., Ltd., Yuyao, Zheijiang 315400 (CN)
(72) Inventor: ZHANG, Kouwen, Ningbo, Zhejiang 315400 (CN); JIANG, Xingzhi, Ningbo, Zhejiang 315400 (CN); DING, Zhi, Ningbo, Zhejiang 315400 (CN); LIU, Cheng, Ningbo, Zhejiang 315400 (CN); ZHOU, Junyu, Ningbo, Zhejiang 315400 (CN)
(74) Representative: Petraz, Gilberto Luigi
(86) International application number: PCT/CN2024/112457
(87) International publication number: WO 2025/060771

(57) **Abstract**

A camera for detecting under-vehicle environment, a method for detecting under-vehicle environment, and a vehicle system are provided. The camera includes a first reflective assembly, a second reflective assembly and a photosensitive assembly. The first reflective assembly has an arc-shaped curved surface, and a radian of the arc-shaped curved surface is a preset bending angle. The first reflective assembly is configured to acquire an under-vehicle ambient light signal within a range of the preset bending angle, and reflect the under-vehicle ambient light signal. The second reflective assembly is configured to reflect the under-vehicle ambient light signal to the photosensitive assembly. The photosensitive assembly is configured to perform imaging processing on the under-vehicle ambient light signal to obtain an under-vehicle image result corresponding to a field of view of the first reflective assembly.

## Description

### CROSS-REFERENCE TO RELATED APPLICATIONS

This application claims priority to Chinese patent application No. 202311222618.8, filed on September 20, 2023, and titled "CAMERA FOR DETECTING UNDER-VEHICLE ENVIRONMENT, METHOD FOR DETECTING UNDER-VEHICLE ENVIRONMENT, AND VEHICLE SYSTEM", Chinese patent application No. 202420064894.X, filed on January 11, 2024, and titled "SELF-CLEANING CAMERA AND VEHICLE", and Chinese patent application No. 202410621893.5, filed on May 17, 2024, and titled "LENS INTEGRATED STRUCTURE, PANORAMIC CAMERA, AND IMAGE PROCESSING METHOD". The contents of the above identified applications are hereby incorporated herein in their entireties by reference.

### TECHNICAL FIELD

The present invention relates to the field of safety detecting equipment technology, and in particular, to a camera for detecting an under-vehicle environment, a method for detecting an under-vehicle environment, and a vehicle system.

### BACKGROUND

To ensure vehicle safety, a large number of cameras are configured inside and outside a vehicle body of the vehicle. The various cameras could include front-view, surround-view, perimeter-view, rear-view, occupant monitoring system (OMS), and driver monitoring system (DMS), so as to achieve comprehensive monitoring and perception of surroundings and interior of the vehicle, thereby improving vehicle safety.

Anything under the vehicle could have a significant impact on safety during vehicle startup or while parking. Many safety incidents arise from insufficient and untimely detection of an under-vehicle environment during stages of startup or parking. For example, upon the vehicle startup, if living objects (such as humans or small animals) present under the vehicle are not detected in time, accidents may occur. However, in conventional technologies, there is a lack of a real-time and effective camera specifically designed for detecting the environment under the vehicle, resulting in low safety in under-vehicle environment detection.

Currently, no effective solution has been proposed for the problem of low accuracy in under-vehicle environment detection.

### SUMMARY

According to various embodiments of the present invention, a camera for detecting an under-vehicle environment, a method for detecting an under-vehicle environment, and a vehicle system are provided.

In a first aspect, a camera for detecting an under-vehicle environment is provided in the present invention. The camera includes a first reflective assembly, a second reflective assembly and a photosensitive assembly. The first reflective assembly has an arc-shaped curved surface, and a radian of the arc-shaped curved surface is a preset bending angle. The first reflective assembly is configured to acquire an under-vehicle ambient light signal within a range of the preset bending angle, and reflect the under-vehicle ambient light signal. The second reflective assembly is configured to reflect the under-vehicle ambient light signal to the photosensitive assembly. The photosensitive assembly is configured to perform imaging processing on the under-vehicle ambient light signal to obtain an under-vehicle image result corresponding to a field of view of the first reflective assembly. The field of view is determined according to the preset bending angle.

In an embodiment, the camera further includes a lens assembly. The lens assembly is mounted between the first reflective assembly and the photosensitive assembly and configured to converge the under-vehicle ambient light signal to a surface of the photosensitive assembly.

In an embodiment, the second reflective assembly is axially coincident with the first reflective assembly.

In an embodiment, the second reflective assembly is further configured to rotate around a preset fixed point of the second reflective assembly by a preset rotation angle upon receiving a preset control instruction for the second reflective assembly. The rotation angle is determined according to the control instruction.

In an embodiment, the camera further includes a protective cover structure. The protective cover structure is disposed outside the first reflective assembly, the second reflective assembly, and the photosensitive assembly.

In an embodiment, the camera is electrically connected to a preset console. The console is configured to perform recognition processing on the under-vehicle image result based on a trained target recognition model to obtain an under-vehicle recognition result for the under-vehicle environment, and send the under-vehicle recognition result to a preset display module for display processing.

In an embodiment, the second reflective assembly is configured as at least one of a planar structure or a curved structure.

In an embodiment, the camera further includes a mounting base, an optical lens, and a light-transmissive cover. The optical lens is disposed on the mounting base. The light-transmissive cover includes an annular cover body fixedly mounted on the mounting base and arranged surrounding the optical lens, and a front cover body fixedly connected to the annular cover body. The first reflective assembly includes a curved reflector, and the second reflective assembly includes a catadioptric element. The catadioptric element is fixedly disposed on a rear side of the front cover body, and the catadioptric element has a refractive region located in front of the optical lens and a reflective region surrounding the refractive region. The curved reflector is fixedly connected to the mounting base. The curved reflector has a light window located in an optical path between the catadioptric element and the optical lens and an annular reflective curved surface located around the light window and facing away from the optical lens.

In an embodiment, the catadioptric element includes a light-transmissive substrate fixedly connected to the front cover body, a refractive structure formed on the light-transmissive substrate, and a reflective structure formed on the light-transmissive substrate and located around the refractive structure.

In an embodiment, the refractive structure includes a Fresnel lens structure molded on the light-transmissive substrate.

In an embodiment, the reflective structure includes a highly reflective film attached to a front surface or a rear surface of the light-transmissive substrate.

In an embodiment, the curved reflector includes a glass reflector with an anti-reflective film plated in a central region of the glass reflector or a metal reflector with a hole opened in a central region of the metal reflector.

In an embodiment, the mounting base includes an annular mounting portion configured to allow the optical lens to pass through, an annular inserting portion inserted and fixed to the curved reflector, and an annular fixing portion arranged surrounding the annular inserting portion. A front edge of the annular cover body is fixedly connected to the front cover body, and a rear edge of the annular cover body is fixedly connected to the annular fixing portion.

In an embodiment, the mounting base, the optical lens, the light-transmissive cover, the curved reflector, and the catadioptric element are disposed in a photosensitive path of the photosensitive assembly.

In an embodiment, the photosensitive assembly further includes a circuit board, a photosensitive chip electrically mounted on a front side of the circuit board, and a connector electrically mounted on a rear side of the circuit board. The optical lens is fixedly disposed on the circuit board to be located in a photosensitive path of the photosensitive chip.

In an embodiment, the photosensitive chip has a central photosensitive region corresponding to the refractive region of the catadioptric element, an annular photosensitive region arranged surrounding the central photosensitive region and corresponding to the reflective region of the catadioptric element, and an edge photosensitive region located around the annular photosensitive region.

In an embodiment, the camera further includes a rear housing fixedly connected to the mounting base, and the connector passes through the rear housing.

In an embodiment, the first reflective assembly includes a curved reflector, the second reflective assembly includes a planar reflector, and the camera further includes a camera module, a lifting mechanism, and a cleaning mechanism. The camera module includes the photosensitive assembly, a lens assembly disposed on a photosensitive side of the photosensitive assembly, and a light-transmissive cover covering the lens assembly. The lens assembly includes an optical lens, the planar reflector located below the optical lens, and the curved reflector located around the optical lens. The planar reflector has a reflective plane facing the optical lens. The curved reflector has a light window located in an optical path between the planar reflector and the optical lens, and an annular reflective curved surface located around the light window and facing away from the optical lens. The lifting mechanism is disposed on a vehicle chassis and drivingly connected to the camera module. The lifting mechanism is configured to drive the camera module to lift relative to the vehicle chassis to switch between a retracted state and an extended state. When the camera module is in the extended state, the light-transmissive cover is configured to extend downward through a notch of the vehicle chassis so that the camera module acquires under-vehicle ambient information. When the camera module is in the retracted state, the light-transmissive cover is configured to retract upward and seal the notch of the vehicle chassis. The cleaning mechanism is disposed on the vehicle chassis and arranged surrounding the light-transmissive cover to clean the light-transmissive cover during lifting of the camera module.

In an embodiment, the light-transmissive cover includes an annular cover body surrounding the optical lens and a front cover body fixedly connected to a lower edge of the annular cover body. The planar reflector is fixedly disposed on an upper surface of the front cover body.

In an embodiment, the camera module further includes a pressing ring. The pressing ring includes an annular threaded portion threadedly connected to the optical lens, and an abutting portion and a fixing portion disposed on the annular threaded portion. The abutting portion extends from the annular threaded portion in a bending manner to abut against the curved reflector. The fixing portion extends downward from the annular threaded portion to be fixedly connected to an upper edge of the annular cover body.

In an embodiment, the camera module further includes an upper housing. The pressing ring further includes a mounting portion extending upward from the annular threaded portion. The upper housing is fixedly mounted on the mounting portion to cover the optical lens and the photosensitive assembly.

In an embodiment, the photosensitive assembly includes a circuit board, a photosensitive chip electrically mounted on a lower side of the circuit board, and a connector electrically mounted on an upper side of the circuit board. The optical lens is fixedly disposed on the circuit board to be located in a photosensitive path of the photosensitive chip. The connector passes through the upper housing.

In an embodiment, the lifting mechanism includes a lifting guide rail fixedly disposed on the vehicle chassis, a driving screw rod disposed on the vehicle chassis, and a screw nut threadedly connected to the driving screw rod and sleeved on the lifting guide rail in an up-down sliding manner. The screw nut is fixedly connected to the camera module.

In an embodiment, the cleaning mechanism includes one or more of a flannelette, a brush, a nozzle, and an air nozzle.

In an embodiment, the cleaning mechanism includes an annular brush fixedly disposed on an inner wall of the notch of the vehicle chassis. The annular brush surrounds the annular cover body and is in slidable contact with an outer peripheral surface of the annular cover body.

In a second aspect, a vehicle is further provided in the present invention. The vehicle includes a vehicle chassis and the camera in any one of the embodiments described above. The vehicle chassis has a notch. The camera is disposed on the vehicle chassis and at a position corresponding to the notch.

In a third aspect, an image processing method is further provided in the present invention. The image processing method includes: separating an original image acquired via a central photosensitive region and an annular photosensitive region of a photosensitive chip in a camera, to obtain a central region image and an annular region image independent of each other; processing the central region image and the annular region image respectively through a front-view Image Signal Processing (ISP) process and a surround-view ISP process independent of each other, to obtain a front-view image and a surround-view image; and outputting and/or displaying the front-view image and the surround-view image.

In a fourth aspect, a method for detecting an under-vehicle environment is further provided in the present invention. The method includes: acquiring, by a first reflective assembly, an under-vehicle ambient light signal within a range of a preset bending angle, and reflecting the under-vehicle ambient light signal; reflecting, by a second reflecting assembly, the under-vehicle ambient light signal to a photosensitive assembly; and performing, by the photosensitive assembly, imaging processing on the under-vehicle ambient light signal to obtain an under-vehicle image result corresponding to a field of view of the first reflective assembly. The first reflective assembly has an arc-shaped curved surface, and a radian of the arc-shaped curved surface is the preset bending angle. The field of view is determined according to the preset bending angle.

In a fifth aspect, a vehicle system is further provided in the present invention, including a console and a camera. The camera is located at a bottom of a vehicle and connected to the console, and is configured to acquire an under-vehicle ambient light signal based on a detecting instruction output by the console, and execute the method for detecting the under-vehicle environment described above based on the under-vehicle ambient light signal.

In an embodiment, the camera has a telescopic structure, and the console is further configured to control the camera to extend to detect the under-vehicle environment either or both of when controlling the vehicle to start and when controlling the vehicle to be in a reversing state. The console is further configured to control the camera to retract either or both of when controlling a traveling speed of the vehicle to be greater than or equal to a preset vehicle speed threshold and when controlling the vehicle to be in a stopped state. The console is further configured to control the camera to extend based on the detecting instruction.

Details of one or more embodiments of the present invention are presented in the attached drawings and descriptions below. And other features, purposes, and advantages of the present invention will become apparent from the description, drawings and claims.

### BRIEF DESCRIPTION OF THE DRAWINGS

For a better description and illustration of the technical solutions in the embodiments of the present invention or in the related art, a brief introduction to the accompanying drawings required for describing the embodiments or the related art is given below. The accompanying drawings in the following description merely illustrate some embodiments of the present invention. Those skilled in the art may obtain other drawings according to the disclosed drawings without creative efforts.
FIG. 1 is a structural block diagram of a camera for detecting an under-vehicle environment according to an embodiment.
FIG. 2A is a side view of a first reflective assembly according to an embodiment.
FIG. 2B is a top view of a first reflective assembly according to an embodiment.
FIG. 3 is a schematic flowchart of generating an under-vehicle image result by a photosensitive assembly according to an embodiment.
FIG. 4A and FIG. 4B are schematic structural diagrams of a lens assembly according to an alternative embodiment.
FIG. 5 is a schematic diagram of a second reflective assembly after rotation according to an embodiment.
FIG. 6 is a schematic flowchart of displaying an under-vehicle recognition result according to an embodiment.
FIG. 7A is a schematic diagram of a second reflective assembly having a concave curved structure according to an embodiment.
FIG. 7B is a schematic diagram of a second reflective assembly having a convex curved structure according to an embodiment.
FIG. 8 is a schematic structural diagram of a camera according to an alternative embodiment.
FIG. 9 is a schematic structural diagram of a camera according to an alternative embodiment.
FIG. 10 is a schematic flowchart of a method for detecting an under-vehicle environment according to an embodiment.
FIG. 11 is a structural block diagram of a vehicle system according to an embodiment.
FIG. 12 is a schematic diagram of a mounting position of a camera according to an embodiment.
FIG. 13 is a schematic structural diagram of a camera for detecting an under-vehicle environment according to an embodiment.
FIG. 14 is an enlarged schematic diagram of a catadioptric element of a lens integrated structure in a camera for detecting an under-vehicle environment according to an embodiment.
FIG. 15 is a schematic top view of a photosensitive chip of a photosensitive assembly in a camera for detecting an under-vehicle environment according to an embodiment.
FIG. 16 is a schematic diagram of an optical path of a camera for detecting an under-vehicle environment according to an embodiment.
FIG. 17 is a schematic flowchart of an image processing method according to an embodiment.
FIG. 18 is a perspective view of a camera for detecting an under-vehicle environment according to an embodiment.
FIG. 19 is an exploded view of a camera for detecting an under-vehicle environment according to an embodiment.
FIG. 20 is a schematic cross-sectional view of a camera module in an extended state in a camera for detecting an under-vehicle environment according to an embodiment.
FIG. 21 is a schematic cross-sectional view of a camera module in a retracted state in a camera for detecting an under-vehicle environment according to an embodiment.
FIG. 22 is an enlarged schematic view of a portion A of the camera for detecting an under-vehicle environment shown in FIG. 21.

In the drawings: 110 represents a camera for detecting an under-vehicle environment; 111 represents a first reflective assembly; 112 represents a second reflective assembly; 1110 represents a console; 1 represents a lens integrated structure; 10 represents an optical lens; 20 represents a light-transmissive cover; 21 represents an annular cover body; 22 represents a front cover body; 30 represents a catadioptric element; 301 represents a refractive region; 302 represents a reflective region; 31 represents a light-transmissive substrate; 32 represents a refractive structure; 33 represents a reflective structure; 40 represents a curved reflector; 401 represents a light window; 402 represents an annular reflective curved surface; 403 represents an annular plane; 50 represents a mounting base; 51 represents an annular mounting portion; 52 represents an annular inserting portion; 53 represents an annular fixing portion; 60 represents a photosensitive assembly; 61 represents a circuit board; 62 represents a photosensitive chip; 621 represents a central photosensitive region; 622 represents an annular photosensitive region; 623 represents an edge photosensitive region; 63 represents a connector; 70 represents a rear housing; 120 represents a camera module; 12 represents a lens assembly; 122 represents a planar reflector; 1220 represents a reflective plane; 14 represents a pressing ring; 141 represents an annular threaded portion; 142 represents an abutting portion; 143 represents a fixing portion; 144 represents a mounting portion; 15 represents an upper housing; 16 represents a lifting mechanism; 17 represents a lifting guide rail; 18 represents a driving screw rod; 19 represents a screw nut; 80 represents a cleaning mechanism; 81 represents an annular brush; and 2 represents a vehicle chassis.

### DETAILED DESCRIPTION

The technical solutions in the embodiments of the present invention will be described clearly and completely with reference to the accompanying drawings in the embodiments of the present invention. The embodiments as described are merely some rather than all of the embodiments of the present invention. All other embodiments obtained by those skilled in the art on the basis of the embodiments in the present invention without involving any inventive effort fall within the protection scope of the present invention.

In the description of the present invention, it should be understood by those skilled in the art that orientations or positional relationships indicated by terms such as "longitudinal", "lateral", "upper", "lower", "front", "rear", "left", "right", "vertical", "horizontal", "top", "bottom", "inner", and "outer" are based on the orientations or positional relationships shown in the drawings, which are merely for the convenience of describing the present invention and simplifying the description, and do not indicate or imply that the referred apparatus or element must have a specific orientation and be constructed and operated in a specific orientation. Therefore, the above terms cannot be understood as a limitation on the present invention.

In the present application, the term "a" or "an" in the claims and the description should be understood as "one or more". That is, in one embodiment, the number of an element may be one, while in another embodiment, the number of the element may be more than one. Unless it is explicitly indicated in the present invention that the number of the element is only one, the term "a" or "an" cannot be understood as unique or singular, and the term "a" or "an" cannot be understood as a limitation on quantity.

In the description of the present invention, it should be understood that terms such as "first" and "second" are used for descriptive purposes only and should not be construed as indicating or implying relative importance. In the description of the present invention, it should be noted that, unless otherwise explicitly specified and limited, terms such as "connected" and "coupled" should be understood broadly, for example, these terms may indicate a fixed connection, a detachable connection, or an integral connection; may be a mechanical connection or an electrical connection; may be a direct connection or an indirect connection through an intermediate medium. For those skilled in the art, specific meanings of the above terms in the present invention may be understood according to specific situations.

In the description, references to terms "one embodiment", "an embodiment", "some embodiments", "an example", "specific example", or "some examples" are intended to indicate that specific features, structures, materials, or characteristics described in connection with the embodiment or example are included in at least one embodiment or example of the present invention. In this description, the schematic representations of the above terms are not necessarily directed to the same embodiment or example. Furthermore, the described specific features, structures, materials, or characteristics may be combined in any suitable manner in any one or more embodiments or examples. In addition, for those skilled in the art, different embodiments or examples described in this description, as well as features of different embodiments or examples may be combined and integrated, without being mutually contradictory.

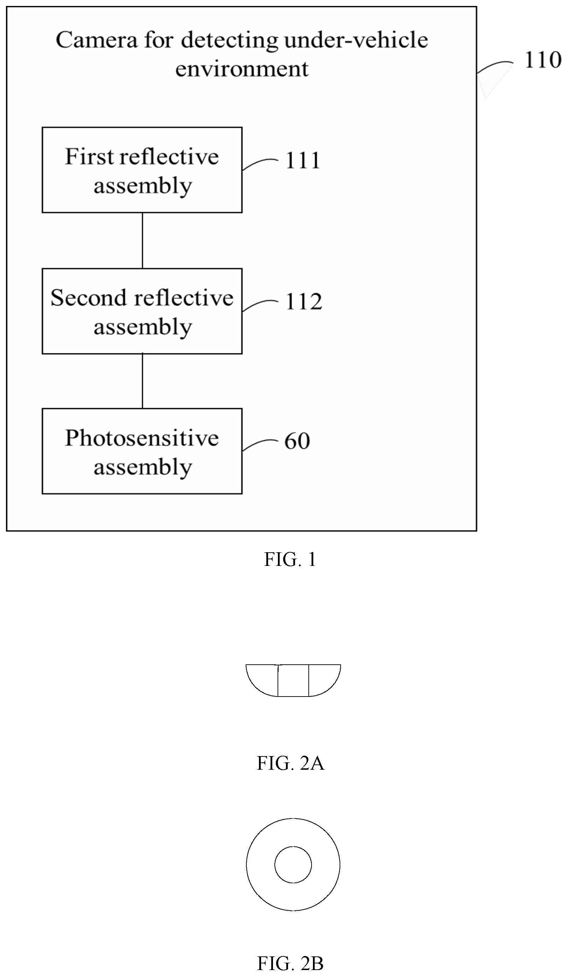

In an embodiment, referring to FIG. 1, a camera 110 for detecting an under-vehicle environment is provided. The camera 110 includes a first reflective assembly 111, a second reflective assembly 112, and a photosensitive assembly 60.

The first reflective assembly 111 has an arc-shaped curved surface, and a radian of the arc-shaped curved surface is a preset bending angle. The first reflective assembly 111 is configured to acquire an under-vehicle ambient light signal within a range of the preset bending angle, and reflect the under-vehicle ambient light signal.

The first reflective assembly 111 may generally have an annular structure with a circular hole formed in the middle of the first reflective assembly 111. In some embodiments, a square hole or the like may be formed in the middle of the first reflective assembly 111. The first reflective assembly 111 has the arc-shaped curved surface, and the arc-shaped curved surface may be curved according to the preset bending angle. The preset bending angle may satisfy optical requirements, or may be determined by a user. The first reflective assembly may be formed as having curved surfaces such as quadric curved surfaces or free-form curved surfaces which are pre-designed with the aid of simulation software. The annular curved surface may reflect 360-degree incident light, resulting in a horizontal viewing angle of 360 degrees. The radian of the annular curved surface in a vertical direction may be designed as required to ensure that an imaging angle of a field of view of the camera 110 satisfies requirements. FIG. 2A is a side view of the first reflective assembly 111 according to an embodiment. FIG. 2B is a top view of the first reflective assembly 111 according to an embodiment. The under-vehicle ambient light signal is acquired by the first reflective assembly 111, and the under-vehicle ambient light signal is reflected to the second reflective assembly 112.

The second reflective assembly 112 is configured to reflect the under-vehicle ambient light signal to the photosensitive assembly 60.

Generally, the first reflective assembly 111 may be disposed between the second reflective assembly 112 and the photosensitive assembly 60. The second reflective assembly 112 is configured to reflect the under-vehicle ambient light signal acquired by the first reflective assembly 111 to the photosensitive assembly 60. The second reflective assembly 112 may generally have a structure including at least one reflector.

The photosensitive assembly 60 is configured to perform imaging processing on the under-vehicle ambient light signal to obtain an under-vehicle image result corresponding to a field of view of the first reflective assembly 111. The field of view is determined according to the preset bending angle.

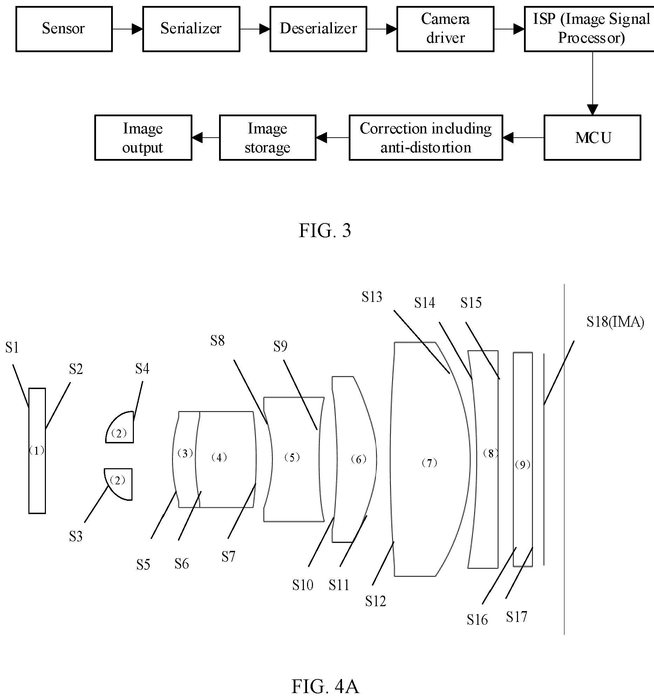

The photosensitive assembly 60 may generally include a photoelectric sensor. The photosensitive assembly 60 may perform imaging processing on the under-vehicle ambient light signal reflected at least twice to obtain the under-vehicle image result. Furthermore, FIG. 3 is a schematic flowchart of generating an under-vehicle image result by the photosensitive assembly 60 according to an embodiment. Firstly, the photoelectric sensor may convert the under-vehicle ambient light signal into an under-vehicle ambient photoelectric signal. The transmission of the under-vehicle ambient photoelectric signal may be completed based on a serializer and a deserializer, and the under-vehicle ambient photoelectric signal may be transmitted to a camera driver. The camera driver may control reception of the transmitted photoelectric signal. An image signal processor may perform digital image signal processing on the received under-vehicle ambient photoelectric signal to optimize an image signal, such as exposure control, brightness adjustment, white balance, color correction, and the like. Then, anti-distortion and other corrections may be performed on the image based on a CPU (Central Processing Unit) or DSP (Digital Signal Processing). Finally, the above under-vehicle image result may be obtained and output. The field of view is determined by the preset bending angle of the first reflective assembly 111, and the preset bending angle may be proportional to the field of view.

In the related art, there are usually two methods for observing the underside of a vehicle: one is a fish-eye camera, and the other is a transparent chassis technology. The fish-eye camera is relatively close to a camera that solves the problem of under-vehicle imaging and observation. The fish-eye camera has a wide-angle field of view, capable of achieving an observation angle greater than 180 degrees or even 190 degrees. However, for larger angles, it becomes difficult to achieve with a penetrating lens-type fish-eye camera. Furthermore, the fish-eye camera typically suffers from the problem of significant distortion and disproportionate close-range coverage, with focal lengths at varying angles mismatched to an under-vehicle observation environment. The transparent chassis technology uses a camera at the front (or rear) of the vehicle to observe conditions under the vehicle. However, the transparent chassis technology can only observe when the vehicle is moving, which has limitations and cannot observe an under-vehicle state when the vehicle is stationary. Such observation is particularly critical when the vehicle is stationary, especially immediately upon vehicle startup. Moreover, the transparent chassis technology essentially constitutes a virtual imaging technique that fills under-vehicle ambient images using a camera at the front (or rear) of the vehicle during the movement of the vehicle, rather than real-time imaging in a physical sense. In the present invention, it can be seen from the first reflective assembly 111, the second reflective assembly 112, and the photosensitive assembly 60 described above that, on one hand, 360-degree annular imaging is achieved based on the first reflective assembly 111. Through the setting of the preset bending angle, the camera can clearly image at different field of view angles. On the other hand, the optical signal can be reflected by the second reflective assembly 112 to the photosensitive assembly 60 for imaging, which can also enable the camera to better adapt to a short-distance environment such as the under-vehicle environment, thereby achieving clear imaging for the under-vehicle environment, effectively solving the problems existing in the related art such as large distortion, inability to perform real-time imaging, and small field of view.

In an embodiment, the camera may further include a lens assembly.

The lens assembly may be mounted between the first reflective assembly and the photosensitive assembly, and configured to converge the under-vehicle ambient light signal to a surface of the photosensitive assembly.

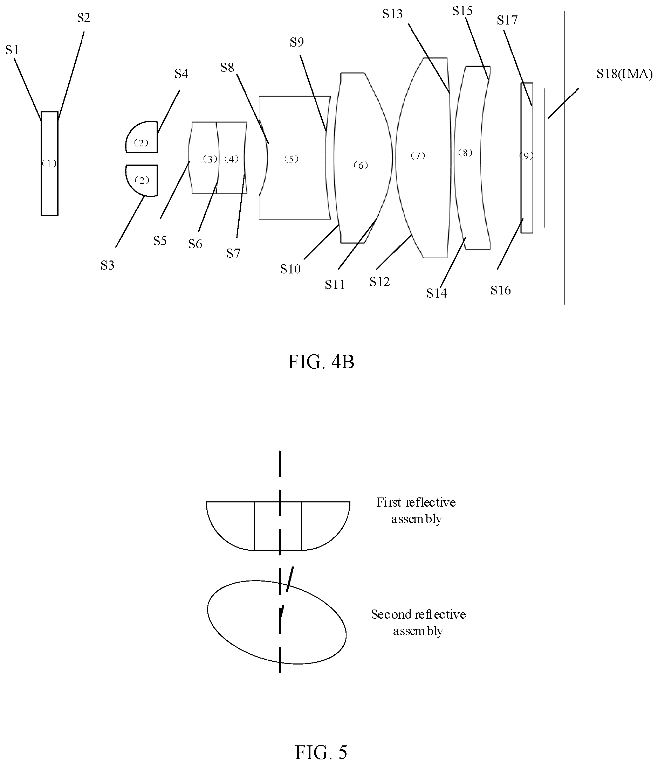

Specifically, the lens assembly may include a plurality of lens elements. The plurality of lens elements may converge the light, which has been reflected twice by the first reflective assembly and the second reflective assembly and has a horizontal direction of 360 degree, onto the surface of the photosensitive assembly for focusing, forming a clear 360-degree surround view image. Two alternative embodiments of the lens assembly are provided in FIG. 4A and FIG. 4B, including six lens elements from a first lens (numbered 3) to a sixth lens (numbered 8). In FIG. 4A and FIG. 4B, (3), (4), (5), etc. represent different lens numbers, and S5, S6, etc. represent different lens surfaces. It can be understood that the lens elements numbered (1) and (2) are lenses of the second reflective assembly and the first reflective assembly, respectively. In fact, the number and shape of the lens elements in the lens assembly are not limited, as long as the design can meet the imaging requirements, any number of lens elements can be used. Through the lens assembly, the acquired under-vehicle ambient light signal can be focused on the surface of the photosensitive assembly to achieve clear imaging. Furthermore, lens elements in the lens assembly can be selected according to actual application scenarios to meet the requirements of different application environments. In each of FIG. 4A and FIG. 4B, (9) may represent an optical filter, and the transmittance for optical signals of different wavelengths varies. An infrared cut-off filter can be selected to configure the camera as a visible light camera. Alternatively, a filter that transmits infrared light while cutting off visible light may be selected to configure the camera as an infrared camera. The surface S18 (IMA) may represent an imaging plane of the photoelectric sensor chip.

In an embodiment, the second reflective assembly may be axially coincident with the first reflective assembly.

Specifically, when the second reflective assembly includes one reflective surface, an axis of the second reflective assembly may be coincident with that of the first reflective assembly, so that the center and the periphery of the first reflective assembly may have the same resolution.

In an embodiment, the second reflective assembly may further be configured to rotate around a preset fixed point of the second reflective assembly by a preset rotation angle upon receiving a preset control instruction for the second reflective assembly. The rotation angle may be determined according to the control instruction.

Specifically, FIG. 5 is a schematic diagram of a second reflective assembly after rotation according to an embodiment. The control instruction for the second reflective assembly may be generally sent by the user. Based on the control instruction for the second reflective assembly, the second reflective assembly may be controlled to rotate around the preset fixed point of the second reflective assembly by the preset rotation angle. Alternatively, the fixed point of the second reflective assembly may generally be a center point of the second reflective assembly. That is, after rotation, the second reflective assembly may be tilted relative to a central axis of the first reflective assembly, no longer being perpendicular. At this time, after two reflections, imaging may be performed on the surface of the photosensitive assembly. In the horizontal direction, the field remains 360-degree annular; in the vertical direction, as a tilt angle changes, a vertical angle range visible in different directions will undergo some variation. That is, an upper boundary and a lower boundary of the field of view will move with the rotation of the second reflective assembly. In practical applications, the user may control the rotation of the second reflective assembly while observing the result after rotation. Through the second reflective assembly, the field of view for the under-vehicle environment can be flexibly changed in practical applications, allowing the camera of the present invention to flexibly adapt to the complex under-vehicle environment. A boundary range of the field of view can be adjusted in real time as required, and observation and detection for the under-vehicle environment can be more comprehensive.

In an embodiment, the camera may further include a protective cover structure.

The protective cover structure may be disposed outside the first reflective assembly, the second reflective assembly, and the photosensitive assembly.

Specifically, the protective cover structure may be configured as a transparent structure. Alternatively, in order to better adapt to the reflective assemblies and the lens assembly, a cross-section of the protective cover structure may be configured as a parabolic structure to protect the reflective assemblies and the photosensitive assembly described above, thereby reducing the possibility of lens contamination.

In an embodiment, the camera may be electrically connected to a preset console.

The console may be configured to perform recognition processing on the under-vehicle image result based on a trained target recognition model to obtain an under-vehicle recognition result for the under-vehicle environment, and send the under-vehicle recognition result to a preset display module for display processing.

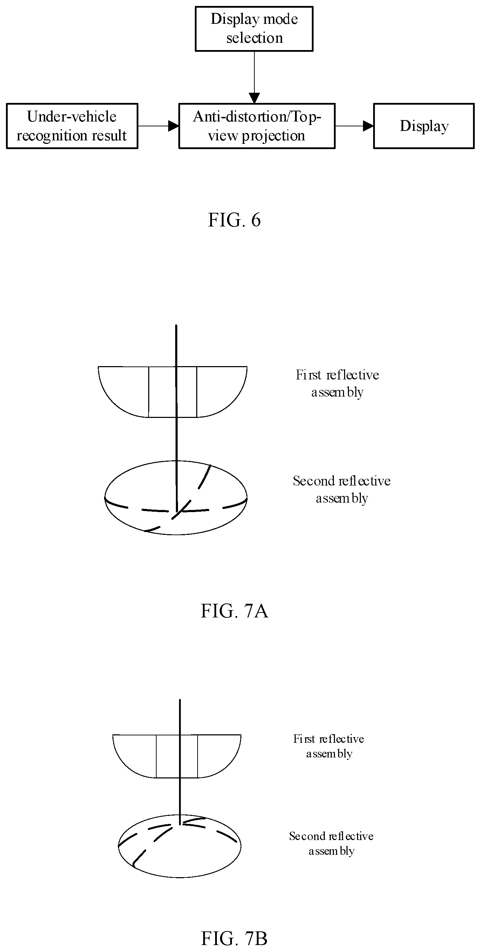

Specifically, the console may include a recognition module and a display module. The recognition module and the display module may be integrated in the console described above. The recognition processing on the under-vehicle image result may be performed by the target recognition model in the recognition module to obtain the under-vehicle recognition result. The under-vehicle recognition result may include prompt information for living objects or obstacles. Furthermore, the console may issue an alarm according to the prompt information. Subsequently, the under-vehicle recognition result may be displayed by the display module. A display mode of the under-vehicle recognition result may be selected by the user, including but not limited to anti-distortion and top-down projection, and FIG. 6 is a schematic flowchart of displaying the under-vehicle recognition result according to an embodiment. Through the console described above, a detection result for the under-vehicle environment can be viewed by the user conveniently, the safety inspection function can be effectively achieved, and the vehicle driving can be controlled better by the user.

In an embodiment, the second reflective assembly may be configured as at least one of a planar structure or a curved structure.

Specifically, FIG. 7A and FIG. 7B are schematic structural diagrams of a second reflective assembly according to an embodiment. The second reflective assembly may have the planar structure or the curved structure. FIG. 7A is a schematic diagram of a second reflective assembly having a concave curved structure. The concave curved structure may be cooperated with the first reflective assembly described above to reflect the under-vehicle ambient light signal, and the light signal may be reflected to the lens assembly and imaged onto the surface of the photosensitive assembly, thereby maintaining the 360-degree annular field in the horizontal direction, with the vertical angle range visible in the vertical direction being determined collectively by the first reflective assembly, the second reflective assembly having the concave curved structure, and the lens assembly. FIG. 7B is a schematic diagram of a second reflective assembly having a convex curved structure. The convex curved structure may be cooperated with the first reflective assembly to reflect the under-vehicle ambient light signal, and the light signal may be reflected to the lens assembly and imaged onto the surface of the photosensitive assembly, thereby maintaining the 360-degree annular field in the horizontal direction, with the vertical angle range visible in the vertical direction being determined collectively by the first reflective assembly, the second reflective assembly having the convex curved structure, and the lens assembly. Similarly, when the second reflective assembly has the planar structure, the horizontal field may remain 360 degrees, and the vertical angle range visible in the vertical direction may be determined collectively by the first reflective assembly, the second reflective assembly having the planar structure, and the lens assembly. Through the second reflective assembly described above, the field of view can be flexibly adjusted according to specific application scenarios, enabling more comprehensive observation and detection of the under-vehicle environment and substantially mitigating safety risks during vehicle operation.

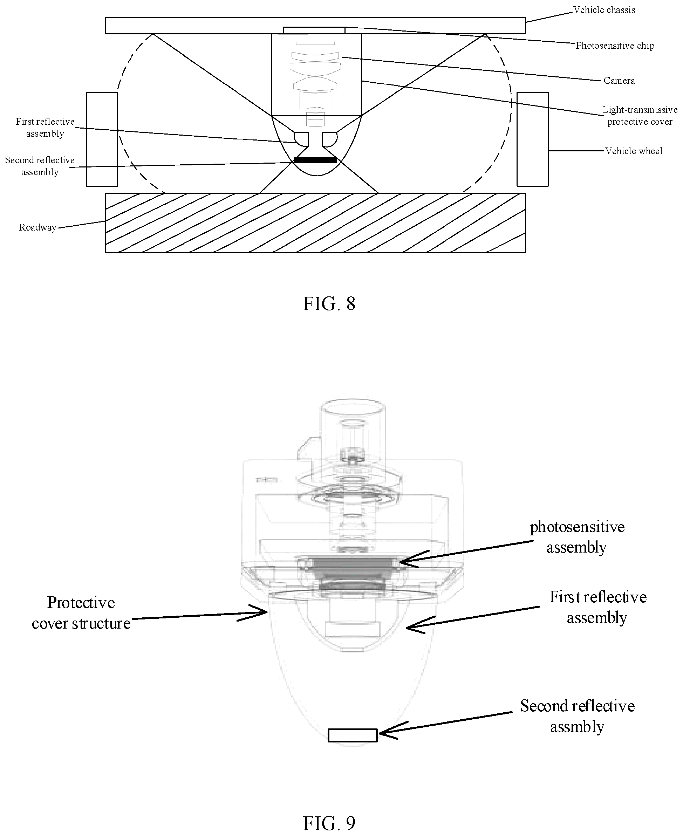

An alternative embodiment of a camera for detecting an under-vehicle environment is provided in the present invention. FIG. 8 and FIG. 9 are schematic structural diagrams of the camera according to the alternative embodiment.

The camera may include a first reflective assembly, a second reflective assembly, a lens assembly, a protective cover structure, and a photosensitive assembly. The first reflective assembly described above may have an annular structure with a circular hole formed in the middle of the first reflective assembly. In addition, the first reflective assembly may have the arc-shaped curved surface, and the radian of the arc-shaped curved surface may be the preset bending angle. Based on the first reflective assembly, the under-vehicle ambient light signal within the range of the preset bending angle can be acquired and reflected to the second reflective assembly. Furthermore, in a design stage of the camera, normal angles at various points on a reflective surface of the first reflective assembly can be adjusted according to a height from the ground, so that the center and the periphery of the first reflective assembly may have the same resolution. The first reflective assembly described above may be disposed between the second reflective assembly and the lens assembly. The second reflective assembly may have a plane mirror structure or a curved mirror structure for reflecting the under-vehicle ambient light signal to the lens assembly. Furthermore, the second reflective assembly may generally have a circular structure, and the axis of the second reflective assembly may coincide with that of the first reflective assembly. The second reflective assembly may be tilted and rotated about the axis based on the control instruction for the second reflective assembly issued by the user, to adapt to different under-vehicle environments and change the field of view. The lens assembly described above may generally include a plurality of lens elements, which can focus the under-vehicle ambient light signal on the surface of the photosensitive assembly to achieve clear imaging. Furthermore, in practical applications, a color filter may be disposed between the photosensitive assembly and the lens assembly. According to imaging requirements, the color filter can be an infrared cut-off visible light filter or an infrared-transmitting infrared filter, for color imaging or infrared imaging. Finally, the protective cover structure may be disposed outside the first reflective assembly, the second reflective assembly, the lens assembly, the color filter, and the photosensitive assembly. Based on the protective cover structure, the possibility of camera fouling can be reduced, and the assemblies described above may be protected. Lastly, the imaging and correction may be performed by the photosensitive assembly based on the under-vehicle ambient light signal to obtain the under-vehicle image result.

All or part of the modules in the camera for detecting the under-vehicle environment may be implemented by software, hardware, and a combination thereof. The above modules may be embedded in or independent of a processor in a computer device in a hardware form, or may be stored in a memory in the computer device in a software form, so that the processor may invoke and perform operations corresponding to the above modules.

Based on the same inventive concept, a method for detecting an under-vehicle environment applied to the camera for detecting the under-vehicle environment described above is further provided in an embodiment of the present invention. The solution for solving the problem provided by the method is similar to the solution described in the above system. Therefore, the specific limitations in one or more embodiments of the method for detecting the under-vehicle environment provided below may refer to the limitations on the camera for detecting the under-vehicle environment described above, which will not be repeated herein.

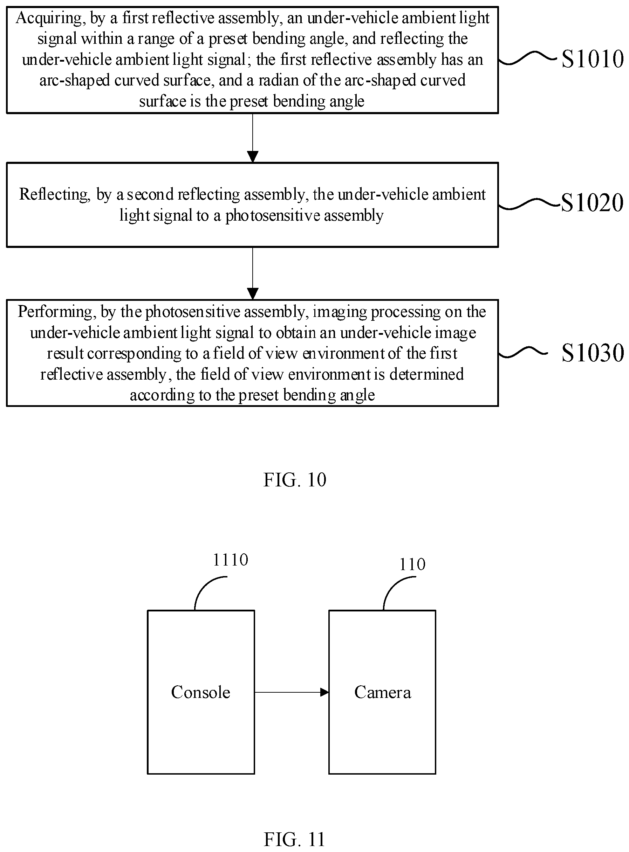

In an embodiment, a method for detecting an under-vehicle environment is further provided, including step 1010 to step 1030. FIG. 10 is a schematic flowchart of a method for detecting an under-vehicle environment according to an embodiment.

Step 1010 include acquiring, by a first reflective assembly, an under-vehicle ambient light signal within a range of a preset bending angle, and reflecting the under-vehicle ambient light signal. The first reflective assembly has an arc-shaped curved surface, and a radian of the arc-shaped curved surface is the preset bending angle.

Specifically, the first reflective assembly may generally have an annular structure with a circular hole formed in the middle of the first reflective assembly. In some embodiments, a square hole or the like may be formed in the middle of the first reflective assembly. The first reflective assembly has the arc-shaped curved surface, and the arc-shaped curved surface may be curved according to the preset bending angle. The preset bending angle may satisfy optical requirements, or may be determined by the user. The first reflective assembly may be formed as having curved surfaces such as quadric curved surfaces or free-form curved surfaces which are pre-designed with the aid of simulation software. The annular curved surface may reflect 360-degree incident light, resulting in a horizontal viewing angle of 360 degrees. The radian of the annular curved surface in the vertical direction may be designed as required to ensure that the imaging angle of the field of view of the camera satisfies the requirements. The under-vehicle ambient light signal is acquired by the first reflective assembly, and the under-vehicle ambient light signal is reflected to the second reflective assembly.

Step 1020 include reflecting, by a second reflecting assembly, the under-vehicle ambient light signal to a photosensitive assembly.

Generally, the first reflective assembly may be disposed between the second reflective assembly and the photosensitive assembly. The second reflective assembly may be configured to reflect the under-vehicle ambient light signal obtained by the first reflective assembly to the photosensitive assembly. The second reflective assembly may generally have a structure including at least one reflector.

Step 1030 include performing, by the photosensitive assembly, imaging processing on the under-vehicle ambient light signal to obtain an under-vehicle image result corresponding to a field of view of the first reflective assembly. The field of view is determined according to the preset bending angle.

Specifically, the photosensitive assembly may generally include a photoelectric sensor. The photosensitive assembly may perform imaging processing on the under-vehicle ambient light signal reflected at least twice to obtain the under-vehicle image result. Firstly, the under-vehicle ambient light signal may be transmitted to a camera driver via a serializer. An image signal processor may be controlled by the camera driver to perform imaging processing and correction on the under-vehicle ambient light signal, such as white balance and color correction. Then, correction such as anti-distortion may be performed by a microcontroller unit. Finally, the above under-vehicle image result may be obtained and output. The field of view may be determined by the preset bending angle of the first reflective assembly. Through the above method, clear and comprehensive imaging for the under-vehicle short-distance environment may be achieved. Compared with the related art, the field of view may be larger, imaging may be more flexible, and the possibility of accidents may be effectively reduced.

It should be understood that although the steps in the flowcharts of the embodiments described above are shown sequentially as indicated by arrows, these steps are not necessarily executed sequentially in the order indicated by the arrows. Unless explicitly stated herein, the execution of these steps is not strictly limited to an order, and these steps may be executed in other orders. In addition, at least a part of steps in the flowcharts of the embodiments described above may include a plurality of sub-steps or a plurality of stages. These sub-steps or stages are not necessarily executed and completed at the same time, but may be executed at different times. These sub-steps or stages are not necessarily executed sequentially, but may be executed alternately with other steps or alternately with at least a part of other steps or sub-steps or stages of other steps.

In an embodiment, referring to FIG. 11, a vehicle system is provided. The vehicle system includes a console 1110 and a camera 110.

The camera 110 is located at a bottom of a vehicle and connected to the console 1110, and is configured to acquire an under-vehicle ambient light signal based on a detecting instruction output by the console 1110, and execute the above method for detecting the under-vehicle environment based on the under-vehicle ambient light signal.

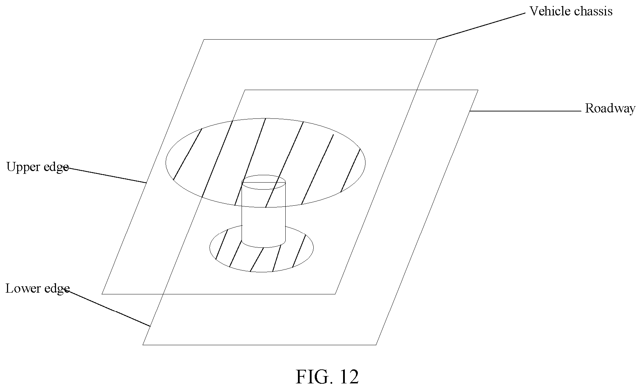

FIG. 12 is a schematic diagram of a mounting position of a camera 110 according to an embodiment. In this embodiment, the camera 110 may be mounted at the chassis of the vehicle, and may be at a center of a front axle, a center of a rear axle, or near a right rear wheel. Based on a detecting instruction output by the console 1110, an under-vehicle ambient light signal is acquired. In practical applications, the console 1110 may further be integrated with an identification module, a display module, and the like. Then, an image generated based on the above under-vehicle ambient light signal may be identified and displayed, thereby facilitating viewing by the user.

In an embodiment, the camera 110 may have a telescopic structure, and the console 1110 may further be configured to control the camera 110 to extend to detect the under-vehicle environment either or both of when controlling the vehicle to start and when controlling the vehicle to be in a reversing state.

The console 1110 may further be configured to control the camera to retract either of both of when controlling a traveling speed of the vehicle to be greater than or equal to a preset vehicle speed threshold and when controlling the vehicle to be in a stopped state.

The console 1110 may further be configured to control the camera to extend based on the detecting instruction.

Specifically, the vehicle speed threshold may be set by the user, for example, set to 30 km/h or the like. When the vehicle is in a starting state and a reversing state, the safety hazard may also be relatively high. At this time, the camera may be set to automatically extend to start detecting the under-vehicle environment. Furthermore, when the traveling speed is greater than the vehicle speed threshold, to prevent the camera from being scratched, the camera may be set to automatically retract. Moreover, when the user needs to view the under-vehicle environment, the camera may be controlled to extend to detect the under-vehicle environment based on the detecting instruction, and retract as required. Through the above method, prolonged exposure of the camera to the external environment can be effectively avoided, thereby preventing possible contamination, scraping, and other situations. On the premise of not affecting actual use, the extension and retraction of the camera may be flexibly determined, which can better adapt to the actual application environment.

Considering that related cameras not only have a central blind spot, i.e., the image on the back side of the planar reflector cannot be seen, but also the center of the obtained image is a shadow of the lens in the planar reflector, resulting in wasted pixels in the central region of the photosensitive chip in the camera. A camera for detecting an under-vehicle environment and an image processing method are provided in the present invention, which can eliminate the central blind spot and improve pixel utilization.

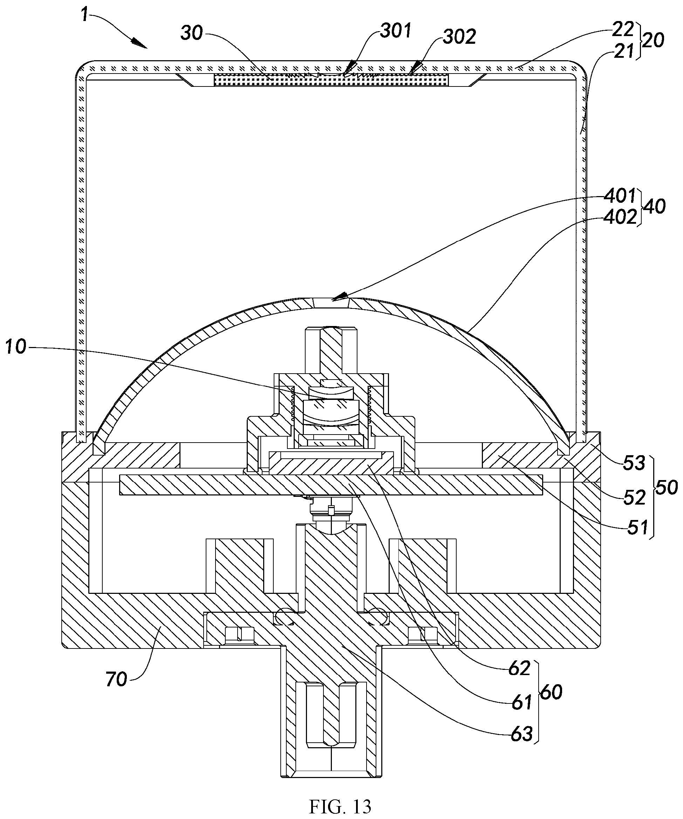

Referring to FIG. 13 to FIG. 16 of the accompanying drawings of the present invention, a camera for detecting an under-vehicle environment may be provided according to an embodiment of the present invention. The camera may include a lens integrated structure 1 and a photosensitive assembly 60. The lens integrated structure 1 may be disposed in a photosensitive path of the photosensitive assembly 60, so that object light is first modulated by the lens integrated structure 1 and then received by the photosensitive assembly 60 for imaging.

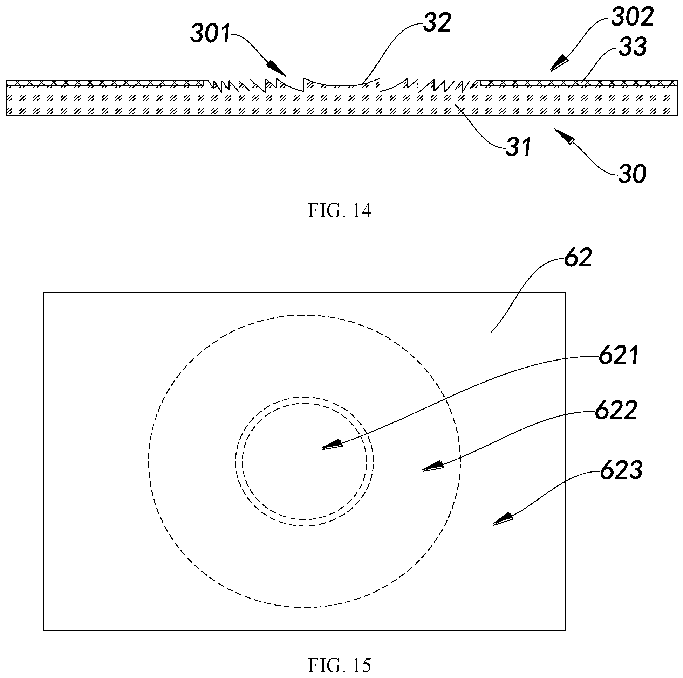

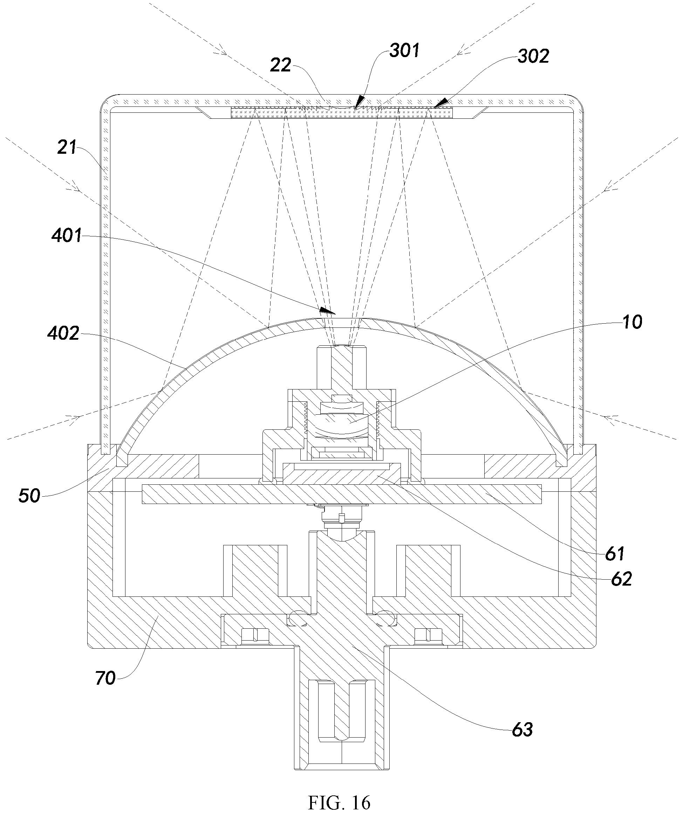

Referring to FIG. 14 and FIG. 16, the lens integrated structure 1 may include an optical lens 10, a light-transmissive cover 20, a catadioptric element 30, a curved reflector 40, and a mounting base 50. The optical lens 10 may be disposed on the mounting base 50. The light-transmissive cover 20 may include an annular cover body 21 fixedly mounted on the mounting base 50 and arranged surrounding the optical lens 10, and a front cover body 22 fixedly connected to the annular cover body 21. The catadioptric element 30 may be fixedly disposed on a rear side of the front cover body 22, and the catadioptric element 30 may have a refractive region 301 located in front of the optical lens 10 and a reflective region 302 surrounding the refractive region 301. The curved reflector 40 may be fixedly connected to the mounting base 50, and the curved reflector 40 may have a light window 401 located in an optical path between the catadioptric element 30 and the optical lens 10, and an annular reflective curved surface 402 located around the light window 401 and facing away from the optical lens 10.

It should be noted that the first reflective assembly 111 may include the curved reflector 40, and the second reflective assembly 112 may include the catadioptric element 30.

Referring to FIG. 16, the circumferential object light may first pass through the annular cover body 21 of the light-transmissive cover 20, then be reflected by the annular reflective curved surface 402 of the curved reflector 40 to the reflective region 302 of the catadioptric element 30, and be reflected by the reflective region 302 of the catadioptric element 30 to pass through the light window 401 of the curved reflector 40 and enter the optical lens 10, and finally be modulated by the optical lens 10 to be received and imaged by the photosensitive assembly 60 to obtain a surround-view image. Meanwhile, the forward object light may first pass through the front cover body 22 of the light-transmissive cover 20, then be refracted by the refractive region 301 of the catadioptric element 30 to pass through the light window 401 of the curved reflector 40 and enter the optical lens 10, and finally be modulated by the optical lens 10 to be received and imaged by the photosensitive assembly 60 to obtain a front-view image.

It should be noted that, since the reflective region 302 in the catadioptric element 30 of the present invention is located around the refractive region 301, and a diameter of the reflective region 302 is controlled to not affect the imaging of a π mirror structure formed by the reflective region 302 and the annular reflective curved surface 402, the circumferential object light reflected by the annular reflective curved surface 402 can be reflected by the reflective region 302 in the catadioptric element 30 to pass through the light window 401 of the curved reflector 40 and enter the optical lens 10, and the forward object light passing through the front cover body 22 can be refracted by the refractive region 301 in the catadioptric element 30 to pass through the light window 401 of the curved reflector 40 and enter the optical lens 10. Therefore, the camera of the present invention can not only achieve a horizontal 360-degree annular field of view, obtaining a 360-degree surround-view image, but also eliminate a forward blind spot, obtaining a 180-degree front-view image. That is, the camera of the present invention can increase a system field of view to achieve a 540-degree panoramic field of view, which not only enables detection of under-vehicle conditions for safety inspection, automatic driving-assisted parking, and the like to facilitate vehicle control assistance, but also can be applied in fields such as conference systems or security monitoring.

Referring to FIG. 14, the catadioptric element 30 may include a light-transmissive substrate 31 fixedly connected to the front cover body22, a refractive structure 32 formed on the light-transmissive substrate 31, and a reflective structure 33 formed on the light-transmissive substrate 31 and located around the refractive structure 32. In this way, the catadioptric element 30 may have an integrated structure, which not only facilitates mounting and fixing, reducing assembly difficulty, but also helps reduce occupied space and lower an overall height of the camera. At the same time, the catadioptric element 30 and the curved reflector 40 may be completely enclosed within the light-transmissive cover 20 to avoid contamination.

Alternatively, the refractive structure 32 may be configured as a Fresnel lens structure for adjusting an incident angle of the forward object light, thereby accommodating fields of view in both circumferential and forward directions while eliminating the forward blind spot, and facilitating expansion of the forward field of view. In addition, the refractive structure 32 of the present invention may utilize Fresnel lens design principles to adjust a focal length of an equivalent concave lens, so as to adjust a magnitude of the forward field of view.

Alternatively, the Fresnel lens structure may be molded on the light-transmissive substrate 31 to be equivalent to a concave lens, so that the forward object light first forms a virtual image and is then modulated by the optical lens 10 to be imaged on a central photosensitive region of the photosensitive assembly 60. It can be understood that, compared with related concave lenses or lens groups, the Fresnel lens structure of the present invention can also make the overall thickness of the catadioptric element 30 thinner, the weight lighter, and the manufacturing more convenient. In addition, the Fresnel lens structure mentioned in the present invention may be located on the front side or the rear side of the light-transmissive substrate 31, which will not be repeated herein.

Alternatively, the reflective structure 33 may be configured as a highly reflective film configured to reflect the circumferential object light reflected by the curved reflector 40, so that the circumferential object light may be modulated by the optical lens 10 to be imaged on the annular photosensitive region of the photosensitive assembly 60.

Alternatively, referring to FIG. 14, the highly reflective film may be attached to the front surface of the light-transmissive substrate 31. It can be understood that the highly reflective film mentioned in the present invention may be a metal coating plated or deposited on the front surface of the light-transmissive substrate 31.

It should be noted that, in other examples of the present invention, the highly reflective film may be located on the rear surface of the light-transmissive substrate 31, as long as the highly reflective film can perform the required reflective function, which will not be repeated herein. In addition, each of the annular cover body 21 and the front cover body 22 in the light-transmissive cover 20 mentioned in the present invention may be prepared from transparent materials, so as to ensure transmission of the circumferential object light and the forward object light and avoid generating blind spots.

Alternatively, referring to FIG. 13 and FIG. 16, the front cover body 22 and the annular cover body 21 may be integrally connected to form the light-transmissive cover 20 having an integrated structure.

Alternatively, an outer peripheral surface shape of the annular cover body 21 in the light-transmissive cover 20 of the present invention may be configured as having, but not be limited to, a surface shape such as a cylindrical surface, a conical surface, or a prismatic surface.

Alternatively, a surface shape of the annular reflective surface 402 of the curved reflector 40 may be configured as a free-form surface. It can be understood that, in view of a curvature and the surface shape of the free-form surface, simulation analysis may be performed during a preliminary optical design of the present invention to ensure that the curvature of the free-form surface meets design requirements.

In addition, the curved reflector 40 of the present invention may be made of a light-transmissive material such as glass, or may be made of a non-light-transmissive material such as metal, as long as the required light window 401 and annular reflective curved surface 402 can be provided. For example, the curved reflector 40 may be configured as a glass reflector with an anti-reflective film plated on a central region of the glass reflector, so that the light window 401 can be formed by the central region with the anti-reflective film. Alternatively, the curved reflector 40 may also be configured as a metal reflector with a hole opened in the central region of the metal reflector, so that the light window 401 can be formed by the central region formed with the hole. It may be understood that the central region mentioned in the present invention may refer to a region corresponding to an optical path interface between the curved reflector 40 and the optical lens 10. A range of the optical path interface may be determined based on optical simulation results, and generally a slightly larger range may be reserved for the interface in consideration of tolerances, for example, 1 mm to 2 mm larger.

Referring to FIG. 13, the mounting base 50 may include an annular mounting portion 51 configured to allow the optical lens 10 to pass through, an annular inserting portion 52 inserted and fixed to the curved reflector 40, and an annular fixing portion 53 arranged surrounding the annular inserting portion 52. A front edge of the annular cover body 21 may be fixedly connected to the front cover body 22, and a rear edge of the annular cover body 21 may be fixedly connected to the annular fixing portion 53. It can be understood that the fixed connection mentioned in the present invention may be implemented as, but not be limited to, threaded connection, plug-in connection, snap-fit connection, or adhesive bonding, as long as the optical lens 10, the light-transmissive cover 20, the catadioptric element 30, and the curved reflector 40 can be highly integrated, which is beneficial to substantially reducing the number of components, lowering assembly difficulty, and facilitating satisfaction of development requirements for low cost and small volume.

According to the above embodiments of the present invention, referring to FIG. 13 and FIG. 16, the camera may further include a rear housing 70 fixedly connected to the mounting base 50 and configured to enclose the optical lens 10 and the photosensitive assembly 60.

Alternatively, referring to FIG. 13 and FIG. 16, the photosensitive assembly 60 may include a circuit board 61, a photosensitive chip 62 electrically mounted on a front side of the circuit board 61, and a connector 63 electrically mounted on a rear side of the circuit board 61. The optical lens 10 may be fixedly disposed on the circuit board 61 to be located in a photosensitive path of the photosensitive chip 62. The connector 63 may extend through the rear housing 70 for external communication or electrical connection.

Alternatively, referring to FIG. 15, the photosensitive chip 62 may have a central photosensitive region 621 corresponding to the refractive region 301 of the catadioptric element 30, an annular photosensitive region 622 arranged surrounding the central photosensitive region 621 and corresponding to the reflective region 302 of the catadioptric element 30, and an edge photosensitive region 623 located around the annular photosensitive region 622. Thus, the circumferential object light, after being modulated by the optical lens 10, may be transmitted to the annular photosensitive region 622 of the photosensitive chip 62 for photosensitive imaging to obtain a surround-view image. Meanwhile, the forward object light after being modulated by the optical lens 10, may be transmitted to the central photosensitive region 621 of the photosensitive chip 62 for photosensitive imaging to obtain a front-view image.

It should be noted that, since the central photosensitive region 621 and the annular photosensitive region 622 of the photosensitive chip 62 receive the forward object light and the circumferential object light respectively, that is, view different fields of view, if the same Image Signal Processing (ISP) flow is employed for processing, one aspect is often sacrificed for another. For example, when the camera is applied under the vehicle, the annular photosensitive region 622 may receive relatively bright circumferential object light around the vehicle, and the central photosensitive region 621 can only receive relatively dark forward object light under the vehicle, making it impossible to achieve clear imaging throughout the entire field of view. In order to solve this problem, an image processing method is further provided in an embodiment of the present invention, which can process the front-view image of the central photosensitive region and the surround-view image of the annular photosensitive region respectively through two independent image signal processing flows, so as to improve image processing efficiency while achieving clear imaging across the entire field of view.

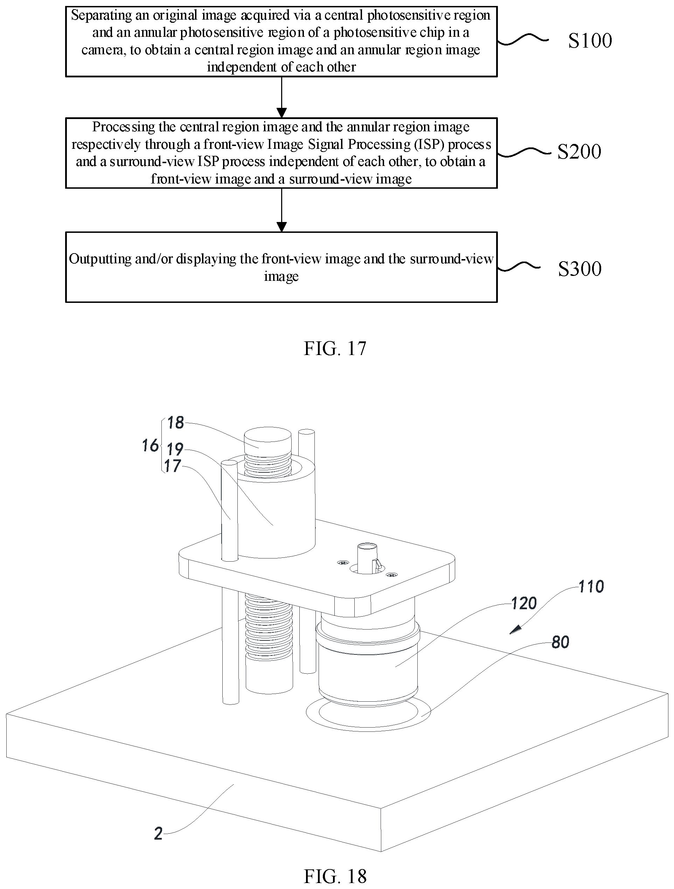

Referring to FIG. 17, the image processing method of the present invention may include the following step 100 to step300.

Step 100 includes separating an original image acquired via a central photosensitive region and an annular photosensitive region of a photosensitive chip in a camera, to obtain a central region image and an annular region image independent of each other.

Step 200 includes processing the central region image and the annular region image respectively through a front-view Image Signal Processing (ISP) process and a surround-view ISP process independent of each other, to obtain a front-view image and a surround-view image.

Step 300 includes outputting and/or displaying the front-view image and the surround-view image.

It should be noted that, at step 100 of the image processing method of the present invention, the separating operation performed on an original image (such as a RAW image) may be performed by, but not limited to, a region of interest. In addition, each of a front-view ISP process and a surround-view ISP process mentioned in the present invention may include, but not limited to, processing such as Black Level Correction (BLC), Lens Shading Correction (LSC), Automatic Exposure (AE), Auto White Balance (AWB), Gamma correction, noise reduction, and sharpening.

It may be understood that, in other examples of the present invention, after the front-view image and the surround-view image are obtained, image fusion may be first performed, followed by image output and/or display, which will not be described in detail herein.

Considering that related under-vehicle cameras are not only susceptible to contamination but also easily damaged by impact from splashing stones. In addition, an under-vehicle camera protruding from the bottom of the vehicle chassis also reduces a height of the vehicle chassis, which seriously affects an obstacle crossing performance of the vehicle. A camera for detecting an under-vehicle environment and a vehicle are provided in the present invention, which can achieve self-cleaning of the camera while solving the problem of splashing stones impacting the camera, helping to improve the safe use of the camera.

Specifically, referring to FIG. 18 to FIG. 22 of the accompanying drawings of the present invention, a vehicle is provided according to an embodiment of the present invention. The vehicle includes a camera 110 for detecting an under-vehicle environment and a vehicle chassis 2 having a notch. The camera 110 for detecting the under-vehicle environment is disposed on the vehicle chassis 2 and at a position of corresponding to the notch to serve as an under-vehicle camera. The camera 110 for detecting the under-vehicle environment is configured to acquire under-vehicle ambient information, facilitating a driver to understand a blind spot situation under the vehicle in real time, and improving driving safety.

More specifically, referring to FIG. 18 to FIG. 21, the camera 110 for detecting the under-vehicle environment may include a camera module 120, a lifting mechanism 16 disposed on the vehicle chassis 2, and a cleaning mechanism 80 disposed on the vehicle chassis 2. The camera module 120 may include a photosensitive assembly 61, a lens assembly 12 disposed on a photosensitive side of the photosensitive assembly 61, and a light-transmissive cover 20 covering the lens assembly 12. The lifting mechanism 16 may be drivingly connected to the camera module 120, and configured to drive the camera module 120 to lift relative to the vehicle chassis 2 to switch between a retracted state and an extended state. When the camera module 120 is in the extended state, the light-transmissive cover 20 may be configured to extend downward through the notch of the vehicle chassis 2, so that the camera module 120 may acquire under-vehicle ambient information. When the camera module 120 is in the retracted state, the light-transmissive cover 20 may be configured to retract upward and seal the notch of the vehicle chassis 2. The cleaning mechanism 80 may be arranged surrounding the light-transmissive cover 20 to clean the light-transmissive cover 20 during lifting of the camera module 120.

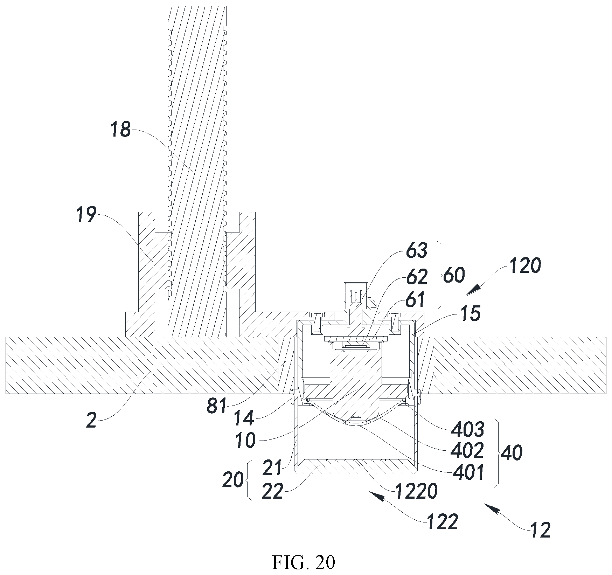

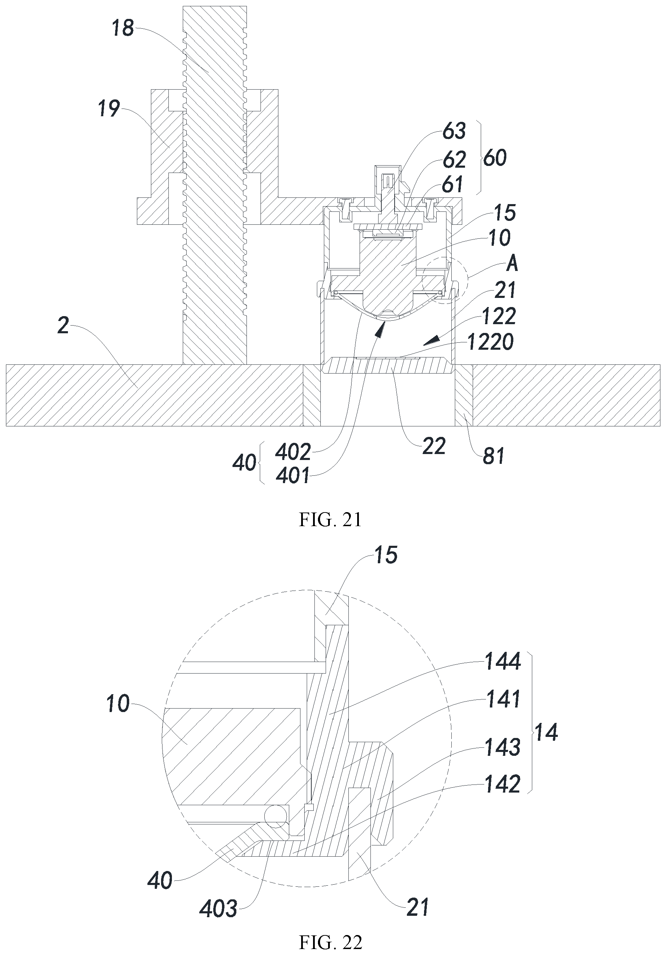

Thus, before the vehicle begins traveling, referring to FIG. 20, the camera module 120 may be driven by the lifting mechanism 16 to descend to be in the extended state, so that the light-transmissive cover 20 of the camera module 120 may extend through the notch of the vehicle chassis 2, thereby achieving under-vehicle ambient information through the camera module 120 to provide feedback on under-vehicle blind spot conditions to the driver and facilitate reduction of safety hazards. After the vehicle begins traveling (e.g., when the vehicle speed exceeds a certain threshold), referring to FIG. 21, the camera module 120 may be driven by the lifting mechanism 16 to ascend to be in the retracted state, so that the light-transmissive cover 20 of the camera module 120 may retract and seal the notch of the vehicle chassis 2. This not only prevents splashed mud and sand from contaminating or damaging the camera module 120 during vehicle travel, but also prevents splashed mud, sand, or water stains from invading the interior of the vehicle chassis 2 through the notch to cause corrosion. Meanwhile, the ascending camera module 120 can also prevent impact damage from obstacles, increase the height of the vehicle chassis, and improve the obstacle crossing performance of the vehicle. It can be understood that when the vehicle begins to stop, the camera module 120 may be driven by the lifting mechanism 16 to descend to be in the extended state. After the vehicle has completely stopped, the camera module 120 may be driven by the lifting mechanism 16 to ascend to be in the retracted state.

In addition, during the process of the camera module 120 being driven by the lifting mechanism 16 to lift, the light-transmissive cover 20 of the camera module 120 may slide up and down relative to the cleaning mechanism 80, so that the cleaning mechanism 80 disposed on the vehicle chassis 2 can completely clean the light-transmissive cover 20, thereby ensuring clear imaging of the camera module 120 and preventing the light-transmissive cover 20 from being contaminated and affecting the imaging quality of the camera module 120. It can be understood that, when the imaging of the camera module 120 is not clear, the lifting mechanism 16 can repeatedly drive the camera module 120 up and down to repeatedly clean the light-transmissive cover 20 by the cleaning mechanism 80 until the imaging is clear.

Referring to FIG. 20 and FIG. 21, the lens assembly 12 in the camera module 120 may include an optical lens 10, a planar reflector 122 located below the optical lens 10, and a curved reflector 40 located around the optical lens 10. The planar reflector 122 may have a reflective plane 1220 facing the optical lens 10. The curved reflector 40 may have a light window 401 located in an optical path between the planar reflector 122 and the optical lens 10, and an annular reflective curved surface 402 located around the light window 401 and facing away from the optical lens 10. In this way, the object light may be first reflected by the annular reflective curved surface 402 of the curved reflector 40 to the reflective plane 1220 of the planar reflector 122, then reflected by the reflective plane 1220 to pass through the light window 401 of the curved reflector 40 and enter the optical lens 10, and finally modulated by the optical lens 10 to be received by the photosensitive assembly 60 for imaging, which facilitates expansion of the system field of view to achieve 360-degree horizontal surround view to satisfy the field-of-view requirements of the under-vehicle environment.

Referring to FIG. 20 and FIG. 21, the light-transmissive cover 20 may include an annular cover body 21 arranged surrounding the optical lens 10 and a front cover body 22 fixedly connected to a lower edge of the annular cover body 21. The planar reflector 122 may be fixedly disposed on an upper surface of the front cover body 22. Thus, when the camera module 120 is in the extended state, the annular cover body 21 of the light-transmissive cover 20 may extend out of the notch of the vehicle chassis 2, enabling the object light to be transmitted through the annular cover body 21 and be reflected by the annular reflective curved surface 402 and the reflective plane 1220 to enter the optical lens 10 to be received and imaged by the photosensitive assembly 60. When the camera module 120 is in the retracted state, the annular cover body 21 of the light-transmissive cover 20 may retract into the vehicle chassis 2, and the notch of the vehicle chassis 2 may be sealed by the front cover body 22 of the light-transmissive cover 20, preventing splashed mud and sand from contaminating or damaging the annular cover body 21 while blocking water stains from invading the interior of the vehicle chassis 2 by the front cover body 22 to avoid corrosion.

Referring to FIG. 20 to FIG. 22, the camera module 120 may further include a pressing ring 14. The pressing ring 14 may include an annular threaded portion 141 threadedly connected to the optical lens 10, and an abutting portion 142 and a fixing portion 143 disposed on the annular threaded portion 141. The abutting portion 142 may extend from the annular threaded portion 141 in a bending manner to abut against the curved reflector 40. The fixing portion 143 may extend downward from the annular threaded portion 141 to be fixedly connected to an upper edge of the annular cover body 21. It can be understood that the pressing ring 14 in the camera 110 for detecting the under-vehicle environment of the present invention not only securely fixes the curved reflector 40 on the optical lens 10, but also serves as a fixing base for the light-transmissive cover 20, thereby highly integrating the optical lens 10, the light-transmissive cover 20, the planar reflector 122, and the curved reflector 40 via a single component, which is beneficial to substantially reducing the number of components, lowering the assembly difficulty, and facilitating satisfaction of development requirements for low cost and small volume.

Referring to FIG. 22, the abutting portion 142 may be integrally connected to an inner peripheral edge of the annular threaded portion 141, and the fixing portion 143 may be integrally connected to an outer peripheral edge of the annular threaded portion 141, forming a mounting groove between the fixing portion 143 and the abutting portion 142 adapted to the upper edge of the annular cover body 21.

Referring to FIG. 20 to FIG. 22, the curved reflector 40 may further have an annular plane 403 located around the annular reflective curved surface 402. The abutting portion 142 of the pressing ring 14 may abut against the annular plane 403 of the curved reflector 40 to increase a contact area between the pressing ring 14 and the curved reflector 40, enhance the abutting and fixing effect, and avoid damage to the annular reflective curved surface 402 by contact with the pressing ring 14. It can be understood that an elastic gasket may be provided between the curved reflector 40 and the optical lens 10 to adjust a spacing between the optical lens 10 and the curved reflector 40 while preventing crush of the curved reflector 40 and/or the optical lens 10.

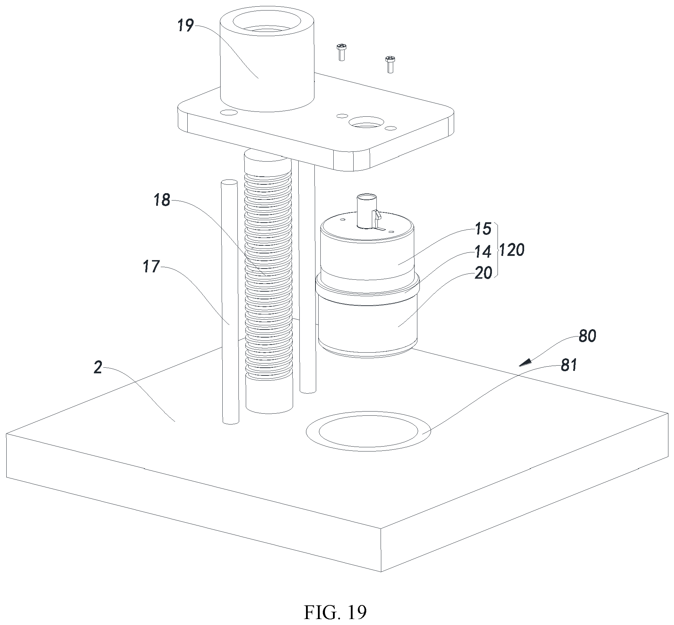

According to the above embodiment of the present invention, referring to FIG. 19 and FIG. 22, the camera module 120 may further include an upper housing 15. The pressing ring 14 may further include a mounting portion 144 extending upward from the annular threaded portion 141. The upper housing 15 may be fixedly mounted on the mounting portion 144 to cover the optical lens 10 and the photosensitive assembly 60.

Alternatively, the upper housing 15 and the annular cover body 21 may be fixedly mounted on the mounting portion 144 and the mounting groove of the pressing ring 14 respectively by, but not limited to, adhesive bonding or threaded connection.

Alternatively, referring to FIG. 20 and FIG. 21, the photosensitive assembly 60 may include a circuit board 61, a photosensitive chip 62 electrically mounted on a lower side of the circuit board 61, and a connector 63 electrically mounted on an upper side of the circuit board 61. The optical lens 10 may be fixedly disposed on the circuit board 61 to be located in a photosensitive path of the photosensitive chip 62. The connector 63 may pass through the upper housing 15 for external communication or electrical connection.

According to the above embodiment of the present invention, referring to FIG. 18 to FIG. 21, the lifting mechanism 16 may include a lifting guide rail 17 fixedly disposed on the vehicle chassis 2, a driving screw rod 18 disposed on the vehicle chassis 2, and a screw nut 19 threadedly connected to the driving screw rod 18 and sleeved on the lifting guide rail 17 in an up-down sliding manner. The screw nut 19 may be fixedly connected to the camera module 120. Thus, when the driving screw rod 18 rotates relative to the vehicle chassis 2, the screw nut 19 may slide along the lifting guide rail 17 under the action of the driving screw rod 18 to drive the camera module 120 to lift and lower to retract from or extend through the notch of the vehicle chassis 2.

Alternatively, the upper housing 15 of the camera module 120 may be fixedly mounted on the screw nut 19 by fixing screws.

It should be noted that the outer peripheral surface shape of the annular cover body 21 in the light-transmissive cover 20 of the present invention may be configured as, but not limited to, a surface shape such as a cylindrical surface, a conical surface, or a prismatic surface. The surface shape of the annular reflective surface 402 of the curved reflector 40 may be configured as a free-form surface. It can be understood that, in view of the curvature and the surface shape of the free-form surface, simulation analysis may be performed during the preliminary optical design of the present invention to ensure that the curvature of the free-form surface meets design requirements.

In addition, the cleaning mechanism 80 of the present invention may include, but not limited to, structures such as a flannelette, a brush, a nozzle (for spraying liquid), or an air nozzle (for spraying gas), as long as the annular cover body 21 of the light-transmissive cover 20 can be cleaned, which will not be repeated herein.

Referring to FIG. 19 to FIG. 21, the cleaning mechanism 80 may be configured as an annular brush 81 fixedly disposed on an inner wall of the notch of the vehicle chassis 2. The annular brush 81 may surround the annular cover body 21 and may be in slidable contact with an outer peripheral surface of the annular cover body 21. Thus, the annular cover body 21 of the light-transmissive cover 20 can be better cleaned, and the notch of the vehicle chassis 2 can be effectively sealed.

It should be noted that the curved reflector 40 of the present invention may be prepared from light-transmissive materials such as glass, or may be prepared from opaque materials such as metal, as long as the required light window 401 and the annular reflective curved surface 402 can be provided. In addition, the plane reflector 122 of the present invention may also be plated with a highly reflective film to enhance the reflection effect and further improve the imaging quality.

Those skilled in the art can understand that all or part of the processes in the above method embodiments may be implemented by a computer program to instruct related hardware, and the program may be stored in a non-volatile computer-readable storage medium. The computer program, when executed, may implement all or part of the steps of the embodiments of the methods described above. Any reference to a memory, a database, or other media used in the embodiments provided in the present invention may include at least one of a non-volatile memory and a volatile memory. The non-volatile memory may include read-only memory (ROM), magnetic tape, floppy disk, flash memory, optical memory, high-density embedded non-volatile memory, resistive random access memory (ReRAM), magnetic resistive random access memory (MRAM), ferroelectric random access memory (FRAM), phase change memory (PCM), graphene memory, and the like. The volatile memory may include a random access memory (RAM), an external cache memory, or the like. By way of illustration and not limitation, the RAM may be in various forms, such as a static random access memory (SRAM) or a dynamic random access memory (DRAM). The database in the embodiments provided in the present invention may include at least one of a relational database and a non-relational database. The non-relational database may include a blockchain-based distributed database and the like, and is not limited thereto. The processor in the embodiments provided in the present invention may be a general-purpose processor, a central processing unit, a graphics processing unit, a digital signal processor, a programmable logic device, a data processing logic based on quantum computing, or the like, and is not limited thereto.

The technical features of the above embodiments can be combined arbitrarily. In order to make the description concise, not all possible combinations of the technical features are described in the embodiments. However, as long as there is no contradiction in the combination of these technical features, the combinations should be considered as in the scope of the present invention.

The above embodiments only express several implementations of the present invention, and the description thereof is specific and detailed, but cannot be construed as limiting the scope of the present invention. It should be noted that, for those skilled in the art, several modifications and improvements may be made without departing from the concept of the present invention, which all fall within the protection scope of the present invention. Therefore, the protection scope of the present invention shall be defined by the appended claims.

## Claims

1. A camera for detecting an under-vehicle environment, **characterized by** comprising: a first reflective assembly, a second reflective assembly and a photosensitive assembly;
the first reflective assembly has an arc-shaped curved surface, and a radian of the arc-shaped curved surface is a preset bending angle; and the first reflective assembly is configured to acquire an under-vehicle ambient light signal within a range of the preset bending angle, and reflect the under-vehicle ambient light signal;
the second reflective assembly is configured to reflect the under-vehicle ambient light signal to the photosensitive assembly; and
the photosensitive assembly is configured to perform imaging processing on the under-vehicle ambient light signal to obtain an under-vehicle image result corresponding to a field of view of the first reflective assembly, wherein the field of view is determined according to the preset bending angle.

2. The camera of claim 1, further comprising a lens assembly, wherein
the lens assembly is mounted between the first reflective assembly and the photosensitive assembly and configured to converge the under-vehicle ambient light signal to a surface of the photosensitive assembly.

3. The camera of claim 1, wherein the second reflective assembly is axially coincident with the first reflective assembly.

4. The camera of claim 1, wherein the second reflective assembly is further configured to rotate around a preset fixed point of the second reflective assembly by a preset rotation angle upon receiving a preset control instruction for the second reflective assembly, wherein the rotation angle is determined according to the control instruction.

5. The camera of claim 1, further comprising a protective cover structure, wherein
the protective cover structure is disposed outside the first reflective assembly, the second reflective assembly, and the photosensitive assembly.

6. The camera of claim 1, wherein the camera is electrically connected to a preset console; and
the console is configured to perform recognition processing on the under-vehicle image result based on a trained target recognition model to obtain an under-vehicle recognition result for the under-vehicle environment, and send the under-vehicle recognition result to a preset display module for display processing.

7. The camera of claim 1, wherein the second reflective assembly is configured to have at least one of a planar structure or a curved structure.

8. The camera of claim 1, further comprising a mounting base, an optical lens, and a light-transmissive cover, wherein
the optical lens is disposed on the mounting base;
the light-transmissive cover comprises an annular cover body fixedly mounted on the mounting base and arranged surrounding the optical lens, and a front cover body fixedly connected to the annular cover body;
the first reflective assembly comprises a curved reflector, and the second reflective assembly comprises a catadioptric element;
the catadioptric element is fixedly disposed on a rear side of the front cover body, and the catadioptric element has a refractive region located in front of the optical lens and a reflective region surrounding the refractive region; and
the curved reflector is fixedly connected to the mounting base, and the curved reflector has a light window located in an optical path between the catadioptric element and the optical lens and an annular reflective curved surface located around the light window and facing away from the optical lens.

9. The camera of claim 8, wherein the catadioptric element comprises a light-transmissive substrate fixedly connected to the front cover body, a refractive structure formed on the light-transmissive substrate, and a reflective structure formed on the light-transmissive substrate and located around the refractive structure.

10. The camera of claim 9, wherein the refractive structure comprises a Fresnel lens structure molded on the light-transmissive substrate.

11. The camera of claim 9, wherein the reflective structure comprises a highly reflective film attached to a front surface or a rear surface of the light-transmissive substrate.

12. The camera of any one of claims 8 to 11, wherein the curved reflector comprises a glass reflector with an anti-reflective film plated in a central region of the glass reflector or a metal reflector with a hole opened in a central region of the metal reflector.

13. The camera of any one of claims 8 to 11, wherein the mounting base comprises an annular mounting portion configured to allow the optical lens to pass through, an annular inserting portion inserted and fixed to the curved reflector, and an annular fixing portion arranged surrounding the annular inserting portion; and a front edge of the annular cover body is fixedly connected to the front cover body, and a rear edge of the annular cover body is fixedly connected to the annular fixing portion.

14. The camera of claim 8, wherein the mounting base, the optical lens, the light-transmissive cover, the curved reflector, and the catadioptric element are disposed in a photosensitive path of the photosensitive assembly.

15. The camera of claim 14, wherein the photosensitive assembly further comprises a circuit board, a photosensitive chip electrically mounted on a front side of the circuit board, and a connector electrically mounted on a rear side of the circuit board; and the optical lens is fixedly disposed on the circuit board to be located in a photosensitive path of the photosensitive chip.

16. The camera of claim 15, wherein the photosensitive chip has a central photosensitive region corresponding to the refractive region of the catadioptric element, an annular photosensitive region arranged surrounding the central photosensitive region and corresponding to the reflective region of the catadioptric element, and an edge photosensitive region located around the annular photosensitive region.

17. The camera of claim 15 or claim 16, further comprising a rear housing fixedly connected to the mounting base, wherein the connector passes through the rear housing.

18. The camera of claim 1, wherein the first reflective assembly comprises a curved reflector, the second reflective assembly comprises a planar reflector, and the camera further comprises a camera module, a lifting mechanism, and a cleaning mechanism, wherein
the camera module comprises the photosensitive assembly, a lens assembly disposed on a photosensitive side of the photosensitive assembly, and a light-transmissive cover covering the lens assembly, the lens assembly comprises an optical lens, the planar reflector located below the optical lens, and the curved reflector located around the optical lens, the planar reflector has a reflective plane facing the optical lens; the curved reflector has a light window located in an optical path between the planar reflector and the optical lens, and an annular reflective curved surface located around the light window and facing away from the optical lens;
the lifting mechanism is disposed on a vehicle chassis and drivingly connected to the camera module, the lifting mechanism is configured to drive the camera module to lift relative to the vehicle chassis to switch between a retracted state and an extended state; when the camera module is in the extended state, the light-transmissive cover is configured to extend downward through a notch of the vehicle chassis so that the camera module acquires under-vehicle ambient information; and when the camera module is in the retracted state, the light-transmissive cover is configured to retract upward and seal the notch of the vehicle chassis; and
the cleaning mechanism is disposed on the vehicle chassis and arranged surrounding the light-transmissive cover to clean the light-transmissive cover during lifting of the camera module.

19. The camera of claim 18, wherein the light-transmissive cover comprises an annular cover body surrounding the optical lens and a front cover body fixedly connected to a lower edge of the annular cover body; and the planar reflector is fixedly disposed on an upper surface of the front cover body.

20. The camera of claim 19, wherein the camera module further comprises a pressing ring, the pressing ring comprises an annular threaded portion threadedly connected to the optical lens, and an abutting portion and a fixing portion disposed on the annular threaded portion; the abutting portion extends from the annular threaded portion in a bending manner to abut against the curved reflector; and the fixing portion extends downward from the annular threaded portion to be fixedly connected to an upper edge of the annular cover body.

21. The camera of claim 20, wherein the camera module further comprises an upper housing; and the pressing ring further comprises a mounting portion extending upward from the annular threaded portion, and the upper housing is fixedly mounted on the mounting portion to cover the optical lens and the photosensitive assembly.

22. The camera of claim 21, wherein the photosensitive assembly comprises a circuit board, a photosensitive chip electrically mounted on a lower side of the circuit board, and a connector electrically mounted on an upper side of the circuit board; the optical lens is fixedly disposed on the circuit board to be located in a photosensitive path of the photosensitive chip; and the connector passes through the upper housing.

23. The camera of any one of claims 18 to 22, wherein the lifting mechanism comprises a lifting guide rail fixedly disposed on the vehicle chassis, a driving screw rod disposed on the vehicle chassis, and a screw nut threadedly connected to the driving screw rod and sleeved on the lifting guide rail in an up-down sliding manner; and the screw nut is fixedly connected to the camera module.

24. The camera of any one of claims 18 to 22, wherein the cleaning mechanism comprises one or more of a flannelette, a brush, a nozzle, and an air nozzle.

25. The camera of any one of claims 19 to 22, wherein the cleaning mechanism comprises an annular brush fixedly disposed on an inner wall of the notch of the vehicle chassis, and the annular brush surrounds the annular cover body and is in slidable contact with an outer peripheral surface of the annular cover body.

26. A vehicle, **characterized by** comprising:
a vehicle chassis, having a notch; and
the camera of any one of claims 1 to 25, disposed on the vehicle chassis and at a position corresponding to the notch.

27. An image processing method, **characterized by** comprising:
separating an original image acquired via a central photosensitive region and an annular photosensitive region of a photosensitive chip in a camera, to obtain a central region image and an annular region image independent of each other;
processing the central region image and the annular region image respectively through a front-view Image Signal Processing (ISP) process and a surround-view ISP process independent of each other, to obtain a front-view image and a surround-view image; and
outputting and/or displaying the front-view image and the surround-view image.

28. A method for detecting an under-vehicle environment, **characterized by** comprising:
acquiring, by a first reflective assembly, an under-vehicle ambient light signal within a range of a preset bending angle, and reflecting the under-vehicle ambient light signal, wherein the first reflective assembly has an arc-shaped curved surface, and a radian of the arc-shaped curved surface is the preset bending angle;
reflecting, by a second reflecting assembly, the under-vehicle ambient light signal to a photosensitive assembly; and
performing, by the photosensitive assembly, imaging processing on the under-vehicle ambient light signal to obtain an under-vehicle image result corresponding to a field of view of the first reflective assembly, wherein the field of view is determined according to the preset bending angle.

29. A vehicle system, **characterized by** comprising a console and a camera, wherein
the camera is located at a bottom of a vehicle and connected to the console, and is configured to acquire an under-vehicle ambient light signal based on a detecting instruction output by the console, and execute the method for detecting the under-vehicle environment of claim 28 based on the under-vehicle ambient light signal.

30. The vehicle system of claim 29, wherein the camera has a telescopic structure, and the console is further configured to control the camera to extend to detect the under-vehicle environment either or both of when controlling the vehicle to start and when controlling the vehicle to be in a reversing state;
the console is further configured to control the camera to retract either or both of when controlling a traveling speed of the vehicle to be greater than or equal to a preset vehicle speed threshold and when controlling the vehicle to be in a stopped state; and
the console is further configured to control the camera to extend based on the detecting instruction.
